# EUROPÄISCHE PATENTSCHRIFT

(11) **EP 2 751 444 B1**
(45) Veröffentlichungstag und Bekanntmachung des Hinweises auf die Patenterteilung: **23.08.2017**
(21) Anmeldenummer: 12731476.3
(22) Anmeldetag: 05.07.2012
(51) Int. Cl.: F16F 1/368, F16F 7/12, B60G 11/08

(54) **HALTERUNG FÜR EINE FEDER**
HOLDER FOR A SPRING
DISPOSITIF DE RETENUE DESTINÉ À UN RESSORT

(30) Priorität: 29.08.2011 DE 102011081693
(43) Veröffentlichungstag der Anmeldung: 09.07.2014
(73) Patentinhaber: ZF Friedrichshafen AG, 88046 Friedrichshafen (DE)
(72) Erfinder: WAGNER, Volker, 88212 Ravensburg (DE); FRUHMANN, Gabriele, A-6900 Bregenz (DE); LEHMKUHL, Stefan, 49214 Bad Rothenfelde (DE); MIDDELKAMPF, Arnold, 49635 Badbergen (DE); BRANDT, Jörg, 49377 Vechta (DE); HOECKMANN, Holger, 49152 Bad Essen (DE); STEINKAMP, Uwe, 49088 Osnabrück (DE); SCHMUDDE, Norbert, 49635 Badbergen (DE); RATTAY, Martin, 49401 Damme (DE)
(86) Internationale Anmeldenummer: PCT/EP2012/063126
(87) Internationale Veröffentlichungsnummer: WO 2013/029846

(56) Entgegenhaltungen:
- EP-A1- 0 218 322
- EP-A1- 0 343 891
- WO-A1-96/27507
- WO-A1-2009/121353
- FR-A1- 2 717 124
- JP-A- 10 024 861
- US-A- 3 971 550
- US-A- 4 781 364
- US-A- 5 062 620
- US-A1- 2003 234 506

## Beschreibung

Die vorliegende Erfindung befasst sich mit einer Halterung für eine Feder, umfassend einen Federbefestigungsbereich zur Befestigung der Feder an der Halterung und einen Radträgerbefestigungsbereich zur Befestigung eines Radträgers an der Halterung nach dem Oberbegriff des Anspruchs 1.

Federn, wie Blattfedern, werden im Fahrwerk häufig zur Federung von Rädern verwendet, um Fahrbahnunebenheiten auszugleichen und so die Fahreigenschaften eines Fahrzeugs zu verbessern. Dazu sind die Räder beziehungsweise die Radträger, an denen die Räder befestigt werden können, über Lenker und Federn mit der Karosserie verbunden. Die Federn können die Räder und/oder die Radträger ebenfalls führen und halten, so dass die Räder in einer kontrollierten Lage relativ zum Fahrwerk und/oder der Karosserie positioniert sind.

Die Blattfeder wird im Stand der Technik über Halterungen mit dem Radträger verbunden. Solche Halterungen können zum Beispiel einfache Schrauben sein, welche durch ein Loch in der Blattfeder geführt werden und mit dem Radträger verbunden sind.

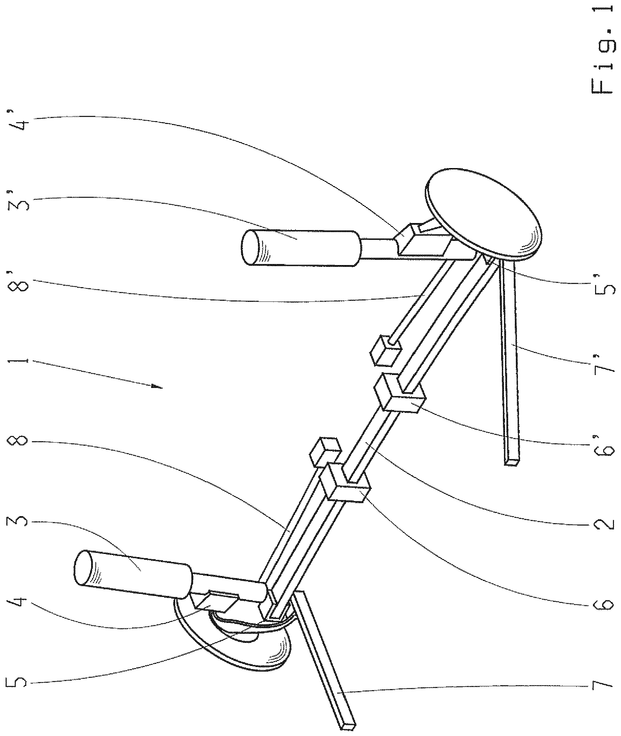

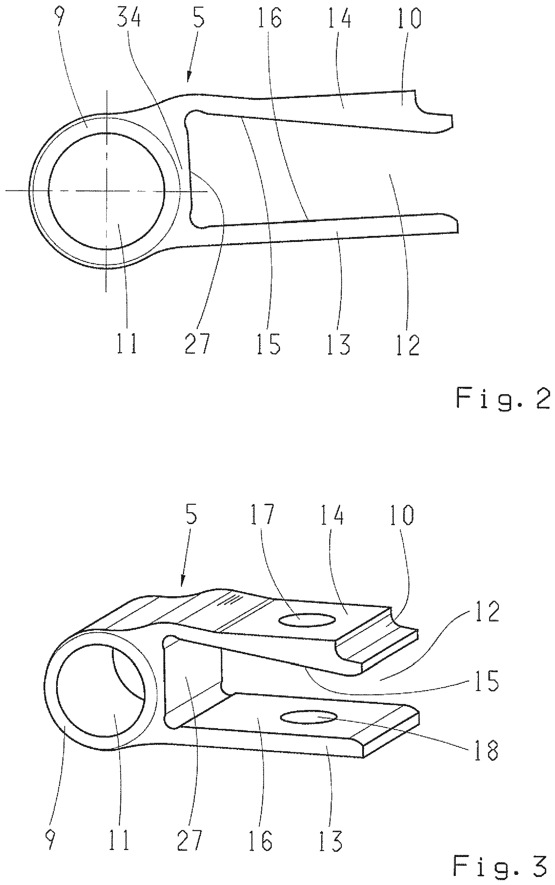

Aus FR 2 717 124 A1 ist eine Halterung für eine radführende Querblattfeder mit den Merkmalen des Oberbegriffs des Anspruchs 1 bekannt. Wie die dortige Fig. 3 zeigt, umfasst die Halterung einen Grundkörper 3 und eine gelenkig damit verbundene Strebe 4. Insgesamt dient die Halterung zur Verbindung zwischen Radträger und Querblattfeder. Ein kappenförmiger Bereich des Grundkörpers ist auf ein freies Ende der Querblattfeder aufgeschoben, damit verpresst und verklebt. Die Strebe 4 ist mit dem Grundkörper über einen gabelförmigen Bereich gelenkig verbunden. Zur Verbindung des Radträgers mit der Halterung ist sowohl am Grundkörper als auch an der Strebe jeweils eine zylindrische Aufnahmehülse ausgebildet. Die beiden Aufnahmehülsen sind so angeordnet, dass diese eine gemeinsame Rotationsachse aufweisen. Im Zusammenbauzustand (s. Fig. 1 und 2) ist der Radträger zwischen den beiden Aufnahmehülsen angeordnet und wird über einen Bolzen 7 um die Rotationsachse drehbar gegenüber der Halterung gelagert. Die Konstruktion und Montage der Halterung ist aufgrund der Anzahl erforderlicher Gelenke aufwendig.

Aufgabe der Erfindung ist es, eine Halterung für eine Blattfeder bereitzustellen, welche die betrieblichen Anforderungen erfüllt, jedoch mit geringem Aufwand herstellbar ist.

Gelöst wird diese Aufgabe durch eine Halterung für eine Blattfeder nach Anspruch 1. Bevorzugte Ausführungsformen finden sich in den Unteransprüchen.

Insbesondere wird die Aufgabe gelöst durch eine Halterung für eine Feder, insbesondere eine Blattfeder, umfassend einen Federbefestigungsbereich zur Befestigung der Feder an der Halterung und einen Radträgerbefestigungsbereich zur Befestigung des Radträgers an der Feder, wobei die Halterung einen Verformungsbereich aufweist zur Kraftübertragung von dem Federbefestigungsbereich auf den Radträgerbefestigungsbereich und wobei die Halterung einstückig aus Metall und/oder Faserverbundwerkstoffen gebildet ist. Durch eine einstückige Halterung kann die Halterung einfach und preiswert hergestellt werden. Somit bietet sich diese Halterung auch in der Serienverwendung an.

Dabei ist der Radträgerbefestigungsbereich der Bereich der Halterung, der zur Befestigung des Radträgers an der Halterung dient. Dabei kann der Radträgerbefestigungsbereich auch über mehrere weitere Elemente mit dem Radträger verbunden sein. Der Federbefestigungsbereich dient zur Befestigung der Feder an der Halterung. Auch dieser Bereich muss nicht direkt mit der Feder verbunden sein, sondern auch hier können zwischen Halterung und Feder ein oder mehrere Elemente angeordnet sein.

Somit wurde erkannt, dass anstatt die Feder direkt mit dem Radträger zu verbinden, der Feder eine separate Halterung zugewiesen werden kann, über welche die Feder mit dem Radträger verbunden ist. Dabei ist es nicht notwendig, dass die Halterung unmittelbar mit dem Radträger verbunden ist, vielmehr sind auch Ausgestaltungen denkbar, bei denen zwischen dem Radträger und der Halterung eine oder mehrere Elemente angeordnet sind.

Die Feder kann insbesondere als Blattfeder, bevorzugt als Querblattfeder ausgestaltet sein. Unter einer Blattfeder wird eine Feder verstanden, deren Hauptausbreitungsrichtung von der bevorzugten Federrichtung abweicht, insbesondere die Hauptausbreitungsrichtung im Wesentlichen senkrecht zur bevorzugten Federrichtung ist.

Die Blattfeder kann dabei aus einem oder mehreren Materialien bestehen, insbesondere Metall und/oder Kunststoff. Bevorzugt ist die Blattfeder und/oder Querblattfeder aus einem glasfaserverstärkten Kunststoff.

Insbesondere kann die Halterung dabei so ausgeformt sein, dass bei einer Energieeinleitung, bei der die Feder Schaden nehmen könnte, die Halterung deformiert wird und so die eingeleitete Energie zumindest teilweise innerhalb der Halterung abgebaut wird und nur ein Teil der eingeleiteten Energie auf die Feder übertragen wird. So wird verhindert, dass die Feder beschädigt wird. Bevorzugt weist dabei die Verformung der Halterung eine Form und Größe auf, dass die Feder über die Halterung weiterhin mit dem Radträger verbunden ist und deshalb das Rad weiterhin über die Feder geführt werden kann und eine Weiterfahrt trotz der Verformung möglich ist.

Die Kraft, bei welcher die Feder Schaden nehmen könnte, kann anhand der Kraftgröße, Richtung, Dauer etc. festgelegt werden. Auch ist es möglich, die Halterung so anzupassen, dass die Beschädigung anderer, insbesondere der Feder nachfolgender Teile, wie Lager verhindert wird.

Besonders bevorzugt ist jedoch die Verformung der Halterung am Fahrverhalten des Fahrzeugs deutlich spürbar, so dass der Fahrzeuglenker auf den Schaden in der Halterung durch das Fahrverhalten aufmerksam gemacht wird und so dazu veranlasst wird, diesen Schaden zu beheben. Durch die Verformung in der Halterung wird dabei eine Schädigung der Feder verhindert, so dass lediglich im Schadensfall die Halterung ausgewechselt werden muss und die in den meisten Fällen wesentlich teurere Feder beibehalten werden kann.

Bevorzugt wird durch die Verformung der Halterung die Position der Befestigung des Radträgers an der Halterung in Bezug auf die Befestigung der Feder an der Halterung verschoben und so im Verwendungszustand der Halterung die Radstellung, wie z.B. die Spur und/oder den Sturz, verändert.

Bevorzugt ist die Halterung aus Stahl und/oder Aluminium. Jedoch sind auch Halterungen aus Verbundmaterialien, wie faserverstärkten Kunststoff, insbesondere glasfaserverstärkten Kunststoff, denkbar.

Gemäß einem Ausführungsbeispiel ist der Verformungsbereich so ausgestaltet, dass er sich plastisch verformt, wenn eine Kraft, welche eine gewisse Grenzkraft überschreitet und insbesondere zu einer Schädigung der Feder führen könnte, von dem Radträgerbefestigungsbereich auf den Federbefestigungsbereich übertragen wird. Durch die plastische Verformung der Halterung kann die Halterung so ausgeformt werden, dass sie bei der Übertragung von Kräften, die im Normalbereich liegen, kaum oder nur gering elastisch verformt und so eine stabile und gleichbleibende Führung der Räder erlaubt. Wird eine Kraft in die Halterung eingeleitet, die so groß ist, dass sie die Feder dauerhaft schädigen könnte, so wird der Verformungsbereich der Halterung plastisch verformt und damit die Energie durch die plastische Verformung abgebaut und nicht auf die nachfolgenden Bauteile, wie die Feder weitergeleitet.

Bevorzugt nähert sich durch die Verformung des Verformungsbereichs der Radträgerbefestigungsbereich an den Federbefestigungsbereich an. Dadurch kann durch die Verformung die Lage des Radträgers relativ zu der Feder verändert werden. Durch die veränderte Lage der Halterung können die Räder in Vorspur oder Nachspur gehen, je nach Befestigung der Halterung an dem Radträger. Dies führt zu einem merklich veränderten Fahrverhalten.

Bevorzugt ist der Verformungsbereich so angeordnet, dass eine Kraft, die vom Radträgerbefestigungsbereich auf den Federbefestigungsbereich geleitet wird, mittels des Verformungsbereichs übertragen wird. Insbesondere kann der Verformungsbereich den Radträgerbefestigungsbereich mit dem Federbefestigungsbereich verbinden.

Bevorzugt befindet sich der Verformungsbereich in der Hauptausbreitungsrichtung der Feder zwischen dem Radträgerbefestigungsbereich und dem Federbefestigungsbereich. Der Federbefestigungsbereich ist dabei der Bereich, an dem die Feder an der Halterung befestigt wird. Dabei kann die Feder im Befestigungsbereich durch die Halterung umfasst werden und so von mehreren Seiten gehalten werden. Auch kann im Befestigungsbereich die Halterung über ein Befestigungsmittel, wie einer Schraube, einem Nagel oder eine Niete, mit der Feder lösbar oder dauerhaft verbunden sein. Der Radträgerbefestigungsbereich ist dabei der Bereich, in dem die Halterung so ausgebildet ist, dass sie mittelbar oder unmittelbar mit dem Radträger verbunden werden kann. Durch die Anordnung des Verformungsbereichs zwischen dem Radträgerbefestigungsbereich und dem Federbefestigungsbereich, bevorzugt entlang der Hauptausbreitungsrichtung der Feder, erlaubt es, die Halterung so zu konzipieren, dass sie als Verlängerung der Feder wirkt. Dies erlaubt die Verwendung der Halterung auch in Federkonzepten bzw. Fahrwerken, in denen bisher keine oder keine solche Halterung vorgesehen ist, da die Halterung sich in Richtung der Feder erstrecken kann und so den Verlauf der Feder weiterführt.

Jedoch ist es auch möglich in der Hauptausbreitungsrichtung der Feder den Radträgerbefestigungsbereich neben oder versetzt zu dem Federbefestigungsbereich anzuordnen und so die Anordnung der Feder in verschiedenen Bauräumen zu ermöglichen.

Die Halterung kann mittels Strangpressen hergestellt werden, jedoch sind auch verschiedene andere Fertigungsmethoden denkbar.

Bevorzugt weist die Halterung zumindest eine Strebe auf, die sich vom Radträgerbefestigungsbereich zum Federbefestigungsbereich erstreckt. Die Strebe weist bevorzugt einen geringeren Querschnitt auf als der Federbefestigungsbereich und/oder der Radträgerbefestigungsbereich und/oder als eine Strebe im Federbefestigungsbereich und/oder eine Strebe im Radträgerbefestigungsbereich. Die Strebe kann so ausgebildet sein, dass sie bei einer zu hohen Krafteinleitung in eine Richtung, die von ihrer Längsausrichtung abweicht, abknickt und somit eine definierte Verformung der Halterung hervorruft. Bevorzugt findet dabei die Verformung der Halterung allein im Verformungsbereich statt. Dadurch wird eine Verformung der Befestigungsbereiche, also des Federbefestigungsbereichs und/oder des Radträgerbefestigungsbereichs und damit eine Beschädigung der Feder und/oder der Radträger vermieden.

Bevorzugt weist zumindest die Strebe des Verformungsbereichs eine Krümmung auf, welche die Verformung im Fall einer übergroßen Krafteinleitung vorgibt. Diese Krümmung ist bevorzugt in Richtung senkrecht zur Verbindungslinie Feder-Radträger.

Bevorzugt ist die Strebe des Verformungsbereichs plattenförmig. Plattenförmig kann hier bedeuten, dass eine Ausbreitungsrichtung der Strebe, zum Beispiel die Breite der Strebe, eine zweite Ausbreitungsrichtung, die insbesondere auf der ersten Ausbreitungsrichtung senkrecht stehen kann, überwiegt. Die zweite Ausbreitungsrichtung der Strebe kann zum Beispiel die Höhe der Strebe sein.

Die Form der Strebe kann dabei der zu übertragenden Kraft angepasst sein. Insbesondere kann die Strebe eine Richtung aufweisen, in welche sie bei großer Krafteinleitung gebogen wird. Insbesondere kann der Querschnitt der Strebe in Richtung der bevorzugten Biegung besonders dünn sein. Insbesondere kann der Querschnitt in Richtung der Biegung kleiner sein als senkrecht dazu, besonders bevorzugt kann die Ausbreitung in Richtung der Biegung kleiner als 1/10 der Ausbreitung senkrecht dazu sein.

Bevorzugt weist die Halterung insbesondere im Verformungsbereich zwei Streben auf, die auch parallel zueinander und/oder spiegelsymmetrisch zueinander angeordnet sein können. Bevorzugt können diese Streben auch eine gleiche Form aufweisen. Die Verwendung von zwei Streben ermöglicht es, eine stabile Verbindung zwischen der Feder und dem Radträger herzustellen, ohne Streben mit besonders großen Querschnitten verwenden zu müssen. Außerdem ermöglicht die Verwendung von zwei Streben eine verbesserte Widerstandskraft gegen Kräfte, welche senkrecht zur Hauptausbreitungsrichtung der Feder wirken.

Bevorzugt weist der Verformungsbereich mehrere Streben auf. Durch diese Mehrzahl an Streben, wie zum Beispiel drei bis zehn oder mehr Streben, bevorzugt sechs Streben, kann die Halterung so ausgelegt werden, dass die Halterung hohe Kräfte aus verschiedenen Richtungen aufnehmen kann ohne sich zu verformen und so eine stabile Positionierung der Feder gegenüber dem Radträger erlaubt. Jedoch erlauben die Streben auch eine definierte Verformung des Verformungsbereichs, wenn der Verformungsbereich hohen Kräften ausgesetzt ist.

Bevorzugt schneiden sich die Streben im Verformungsbereich. Besonders bevorzugt definieren zwei Streben die Seitenflächen der Halterung im Verformungsbereich. Insbesondere schneiden sich die Streben in verschiedenen Punkten, bevorzugt schneiden sich jeweils nur zwei Streben in einem Punkt.

Auch kann mit einer Mehrzahl an Streben im Verformungsbereich eine Fachwerkstruktur geschaffen werden. Dabei können eine Strebe oder zwei Streben eine Begrenzung der Fachwerkstruktur bilden.

Bevorzugt weisen die Streben die Breite der Halterung auf, so dass die Halterung mittels Strangpressen und anschließenden Abtrennen bzw. Vereinzelung von dem Strang hergesellt werden kann.

Gemäß einer weiteren Ausführungsform weist der Verformungsbereich einen Körper mit einer Wabenstruktur auf, insbesondere aus Metall, wie Stahl und/oder Aluminium. Solche Körper können eine Wabenstruktur aufweisen, wobei die Waben eine Vorzugsrichtung zeigen. Bevorzugt verlaufen die Wände der Waben senkrecht zu einer gemeinsamen Ebene, wodurch eine hohe Kraft in Richtung der Wabenwände übertragen werden kann und eine plastische Verformung der Waben bei einer Kraft senkrecht oder winklig zu der Wabenwandrichtung hervorgebracht werden kann. So kann durch die Wabenstruktur und den Verlauf der Wände bei einer hohen Kraft, welche winklig auf die Wabenwandrichtung trifft, der Verformungsbereich in eine vorbestimmte Richtung abknicken und/oder in sich verformen und somit den Abstand und/oder die Position des Radträgers zu der Feder verändern. Damit wird auch der Sturz und/oder die Spur des Rades geändert und somit das Fahrverhalten des Fahrzeugs. Die Änderung des Fahrverhaltens signalisiert dem Fahrer, dass das Fahrwerk beschädigt ist und Teile, insbesondere die Halterung ausgetauscht und/oder in Stand gesetzt werden sollen.

In einer weiteren Ausführungsform weist der Verformungsbereich ein schwammartiges Element auf, dass durch seine schwammartige und/oder schaumartige Struktur gekennzeichnet ist. Das schwammartige Element kann zwischen zwei Streben angeordnet sein, welche die Seitenflächen des Verformungsbereichs definieren. Bevorzugt ist das schwammartige Element aus Metallschaum, wie Aluminiumschaum. Das schwammartige Element kann als von der Halterung separates Stück ausgeformt sein. Auch kann der Aluminiumschaum in den Verformungsbereich eingeschäumt sein.

Weiter bevorzugt ist die Halterung aus Aluminium und/oder Stahl. Solche Materialien sind einerseits leicht plastisch zu verbiegen, ohne dass sie brechen, andererseits eignen sich diese Materialien auch zur Herstellung dauerhafter Fahrwerkskomponenten.

Bevorzugt weist der Radträgerbefestigungsbereich ein Lager wie ein Gummilager zur Befestigung des Radträgers an der Halterung auf. Insbesondere ist die Befestigung eine elastische Befestigung. Ein solches Lager dient zur beweglichen Befestigung des Radträgers an der Halterung, so dass zum Beispiel das Rad durch die Halterung geführt und gelenkt werden kann.

Das Lager kann dabei über Kraftschluss in einer bevorzugt ringförmigen Aufnahme, welche durch die Halterung gebildet ist, gehalten werden.

Weiter bevorzugt weist die Federbefestigung eine Aufnahme auf, in der die Feder aufgenommen werden kann. Die Federaufnahme kann sich in Richtung des Verformungsbereichs ausweiten und damit eine entsprechende, insbesondere am Ende mit einer Verdickung versehene Feder darin gehalten werden.

Bevorzugt ist die Halterung Teil einer McPherson Hinterachse mit radführender Querblattfeder. Jedoch kann die Halterung auch in einem anderen Achskonzepten mit radführender Querblattfeder oder Längsblattfeder sowie Federlenkern oder anderen Fahrwerksbauteilen oder Bauteilen, insbesondere aus Verbundwerkstoffen wie faserverstärkten Kunststoffen, verwendet werden.

Im Weiteren wird die Erfindung unter Zuhilfenahme der Zeichnungen und anhand eines Ausführungsbeispieles näher erläutert.

Dabei zeigt:
- Fig. 1: ein Fahrwerk,
- Fig. 2: eine Halterung,
- Fig. 3: die Halterung aus Fig. 2 in einer dreidimensionalen Darstellung,
- Fig. 4: eine Halterung nach Fig.2 in Verbindung mit einer Querblattfeder und einem Lager,
- Fig. 5: eine weitere Halterung,
- Fig. 6: die Halterung aus Fig. 5 in einer dreidimensionalen Darstellung,
- Fig. 7: die Halterung nach Fig. 5 nach einer Verformung,
- Fig. 8: eine weitere Halterung,
- Fig. 9: die Halterung nach Fig. 8 in einer dreidimensionalen Darstellung,
- Fig. 10: die Halterung nach Fig. 9 nach einer Verformung,
- Fig. 11: eine Halterung mit einem teilweise schwammförmigen Verformungsbereich,
- Fig. 12: eine Halterung nach Fig. 11 in perspektivischer Ansicht,
- Fig. 13: eine weitere Ausführungsform der Halterung,
- Fig. 14: eine weitere Ausführungsform einer Halterung,
- Fig. 15: eine Halterung nach Fig. 14 mit einer Feder.

Fig. 1 zeigt ein Fahrwerk 1, wie es zum Beispiel als Hinterachse in einem PKW verwendet werden kann. Das Fahrwerk weist zwei Radträger 4, 4' auf, an welchen Räder über Radlager angebracht werden können. An den Radträgern 4, 4' sind jeweils ein Längslenker 7, 7' und ein Querlenker 8, 8' befestigt. Dabei erstrecken sich die Längslenker 7, 7' in etwa in Längsrichtung des Fahrzeugs, die Querlenker 8, 8' in etwa in Querrichtung des Fahrzeugs. Die Quer- und Längslenker sind jeweils mit einem Ende an dem Radträger befestigt, während das andere Ende an der Karosserie angeordnet ist.

Weiter weist das Fahrwerk zwei Dämpfer 3, 3' auf, die ebenfalls mit einem Ende mit dem Radträger verbunden sind, während das andere Ende des Dämpfers 3, 3' über Lager mit der Karosserie verbunden ist.

Während die Lenker 7, 7' und 8, 8' die Bewegungsbahn der Radträger 4, 4' bezüglich der Karosserie festlegen, dämpfen die Dämpfer zusätzlich zur Radführung die Bewegung der Radträger bezüglich der Karosserie.

Das Fahrwerk 1 umfasst von links nach rechts folgende Bauteile: Radträger 4, Halterung 5, Querblattfeder 2, Längslenker 7, Dämpfer 3, Querlenker 8, Blattfederhalter 6, Blattfederhalter 6', Querlenker 8', Dämpfer 3', Längslenker 7', Halterung 5', Radträger 4'.

Die beiden Radträger 4,4' sind über eine Feder 2, insbesondere eine Querblattfeder 2 verbunden, welche vorzugsweise aus einem Verbundmaterial, wie glasfaserverstärkten Kunststoff besteht. Die Querblattfeder 2 erstreckt sich quer zur Fahrzeughauptachse, das heißt in der Regel quer zur Fahrtrichtung, und ist über zwei Blattfederhalter 6, 6', die im mittleren Drittel der Querblattfeder 2 angeordnet sind, mit der Karosserie verbunden. Die Querblattfeder 2 ist über Halterungen 5, 5' an den Enden mit den Radträgern 4,4' verbunden.

Fig. 2 zeigt eine Halterung 5,5' umfassend einen Radträgerbefestigungsbereich 9 und einen Federbefestigungsbereich 10. Die Halterung 5 ist dabei aus einem Metall, wie Aluminium, gefertigt. Der Radträgerbefestigungsbereich 9 weist dabei eine ringförmige, mittlere Ausnehmung 11 auf, in die ein Lager zur Befestigung des Radträgers an der Halterung 5 aufgenommen werden kann. Der Federbefestigungsbereich 10 weist zwei gegenüberliegende Stege 13 und 14 auf, die eine Aufnahme 12 bilden, in der die Feder 2 aufgenommen werden kann. Der Radträgerbefestigungsbereich 9 ist dabei anschließend an den Federbefestigungsbereich 10 angeordnet, getrennt durch die Wand 34.

In Fig. 3 ist die Halterung 5 nach Fig. 2 in einer perspektivischen Darstellung gezeigt. Der Federbefestigungsbereich 10 weist die beiden Stege 13 und 14 auf, die jeweils eine Innenfläche 15,16 aufweisen, die bei Aufnahme der Feder 2 an der Feder 2 anliegen. Die Innenflächen 15,16 werden durch die vordere Innenfläche 27 der Wand 34 verbunden, an der die Feder 2 bei Aufnahme in der Aufnahme 12 ebenfalls anliegt. Die vordere Innenfläche 27 steht dabei senkrecht auf der Innenfläche 16. Die beiden Stege 13 und 14 weisen jeweils eine Durchbohrung 17 und 18 auf, die zu den Außenflächen senkrecht verläuft. Die beiden Durchbohrungen 17,18 fluchten miteinander.

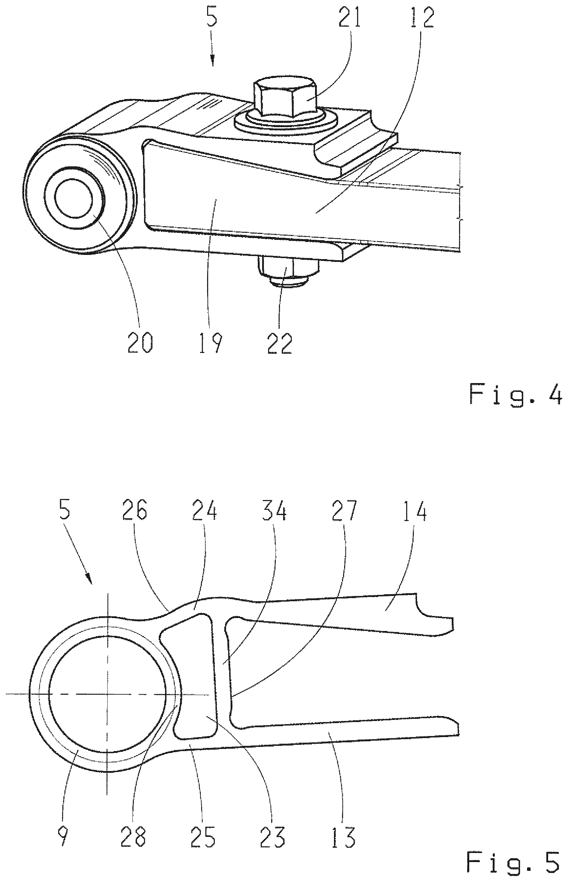

Fig. 4 zeigt die Halterung 5 zusammen mit einem Ende 19 der Feder 2 und einem Lager 20. Das Ende 19 der Feder 2 ist in der Aufnahme 12, die durch die Innenflächen 15 und 16 der Stege 13 und 14 und die vordere Innenfläche 27 festgelegt wird, angeordnet. Das Ende 19 der Feder 2 weist dabei ein Loch (nicht gezeigt) auf, durch das eine Schraube 21 geführt wird. Die Schraube 21 ist ebenfalls durch die Durchbohrungen 17 und 18 der Stege 13 und 14 geführt und mittels einer Mutter 22 gesichert. Die Schraube 21 sichert die Lage der Feder 2 in der Aufnahme 12.

In dem Radträgerbefestigungsbereich 9 ist ein Gummilager 20 angeordnet, das über Kraftschluss fest mit der Halterung 5 verbunden ist. Das Gummilager 20 kann dabei mittels Verschraubung mit dem Radträger 4 verbunden werden.

Fig. 5 zeigt eine weitere Ausgestaltung einer Halterung 5. Dabei befindet sich zwischen dem Radträgerbefestigungsbereich 9 und dem Federbefestigungsbereich 10 ein Verformungsbereich 23, der so ausgestaltet ist, dass er sich verformt, sobald eine Kraft vom Radträgerbefestigungsbereich 9 und/oder dem Federbefestigungsbereich 10 eingeleitet wird, die eine bestimmte Grenzkraft übersteigt. Vorteilhafterweise ist die Grenzkraft kleiner als eine Kraft, welche die Feder 2 schädigt.

Der Verformungsbereich 23 besteht dabei aus zwei Streben 24 und 25, die gegenüberliegend angeordnet sind und den Radträgerbefestigungsbereich 9 mit dem Federbefestigungsbereich 10 verbinden. Die Streben 24 und 25 weisen vorzugsweise die gleiche Breite wie die Stege 13 und 14 auf, sind jedoch in der Höhe verschieden, so dass sich diese Streben 24 und 25 ab einer gewissen Grenzkraft verbiegen. Die untere Strebe 25 verbindet dabei gerade den Radträgerverbindungsbereich 9 mit dem Federbefestigungsbereich 10, während die obere Strebe 24 eine Krümmung senkrecht zur Außenfläche 26 nach außen aufweist, so dass die Verformung im Falle einer übermäßigen Kraft zumindest teilweise vorgegeben ist. Der Verformungsbereich 23 wird auf der einen Seite durch den Radträgerbefestigungsbereich 9, insbesondere die Wand 28 und auf der anderen Seite durch eine Wand 34 begrenzt, wobei die Wand 34 ebenfalls die vordere Innenfläche 27 bildet.

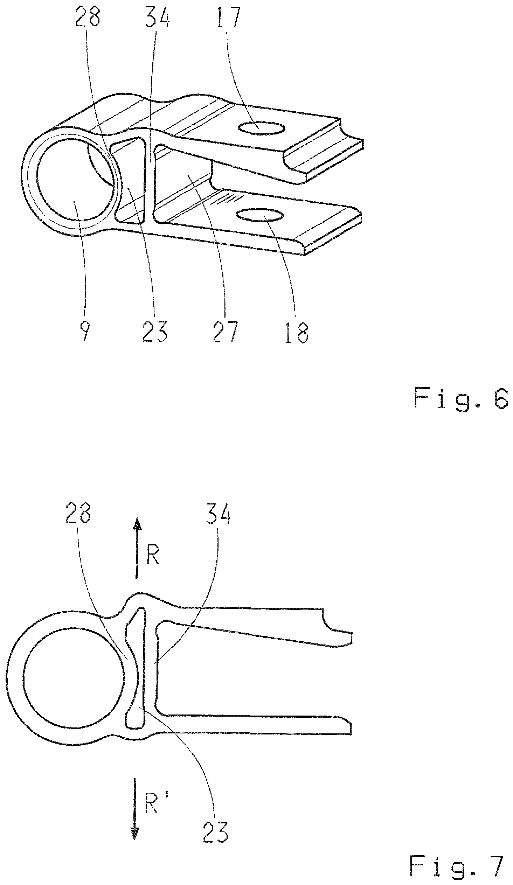

Fig. 6 zeigt die Ausführungsform von der Fig. 5 in einer perspektivischen Ansicht. Dabei ist zu erkennen, dass der Radträgerbefestigungsbereich 9 und der Verformungsbereich 23 und der Federbefestigungsbereich 10 die gleiche Breite aufweisen. Außerdem sind die Löcher 17 und 18 zu erkennen, mittels derer über eine Schraube 21 die Feder 2 an der Halterung 5 fixiert werden kann.

Fig. 7 zeigt die Halterung 5 nach einer Verformung aufgrund einer übermäßigen Krafteinleitung. Die beiden Streben 24 und 25 sind dabei nach außen in Richtung R und R' verbogen. Dabei rückt der Radträgeraufnahmebereich 9 näher an den Federbefestigungsbereich 10. Dies führt zu einer Verschiebung bzw. Verschwenkung des Radträgers 4 bezüglich der Karosserie. Der Radträgerbefestigungsbereich 9 wird gegenüber dem Federbefestigungsbereich 10 jedoch nicht oder nur minimal seitlich, senkrecht zur Kraftrichtung verschoben.

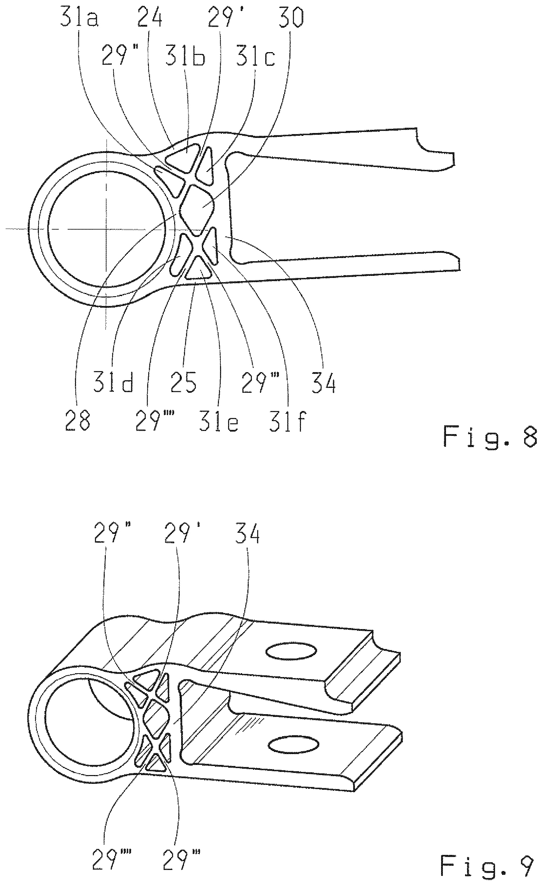

Fig. 8 zeigt eine weitere Ausführungsform einer Halterung 5. Dabei weisen hier die Streben 24 und 25 eine geringere Höhe auf als die Stege 13 und 14, und sind über weitere Streben 29 mit der Wand 28 und der Wand 34 verbunden. Die Streben 29 weisen die gleiche Breite auf, wie die Streben 24 und 25 und sind dabei winklig zu den Streben 24 und 25 angeordnet und weisen in etwa einen Winkel von 45 °zu den Streben 24 bzw. 25 auf. Dabei verbindet eine Strebe 29' die Strebe 24 mit der Wand 28, eine Strebe 29" die Strebe 24 mit der Wand 34, eine Strebe 29'" die Strebe 25 mit der Wand 28 und eine Strebe 29"" die Strebe 25 mit der Wand 29. Dabei sind die Streben 29' und 29" und die Streben 29'" und 29"" miteinander verbunden und kreuzen sich. Durch die Strebenanordnung ergibt sich im Verformungsbereich ein Zwischenraum 30 mit einem viereckigen Querschnitt in der Mitte, der von sechs Zwischenräumen 31 a, 31 b, 31 c, 31 d, 31 e, 31f mit einem in etwa dreieckförmigen Querschnitt benachbart ist.

Fig. 9 zeigt die Halterung 5 nach der Fig. 8 in einer perspektivischen Ansicht. Dabei ist auch die flächige Ausbildung der Streben 29', 29", 29''' und 29"" zu erkennen.

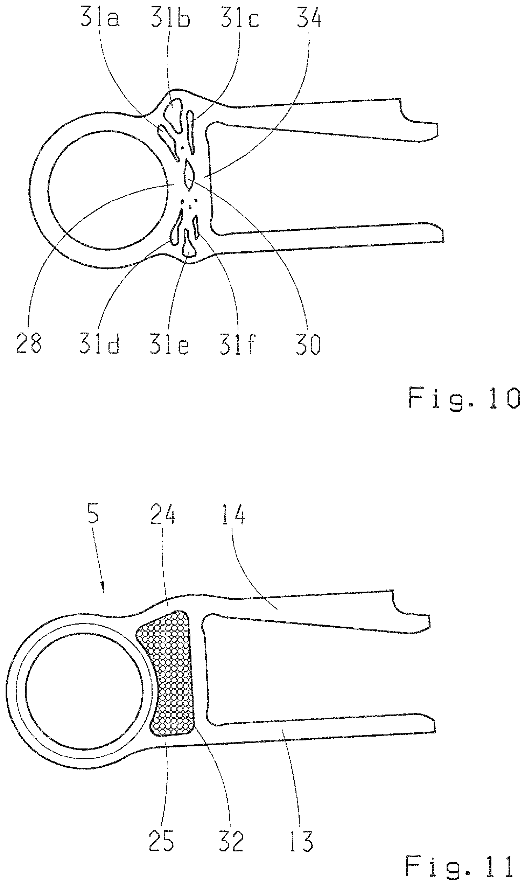

Fig. 10 zeigt die Halterung 5 nach Fig. 8 in einem verformten Zustand, nach einer übermäßigen Krafteinleitung. Dabei sind die Streben 24 und 25 wiederum nach außen gebogen, so dass der Radträgerbefestigungsbereich sich an Federbefestigungsbereich annähert. Die Zwischenräume 30 und 31 a bis 31f verformen sich dabei und werden kleiner.

Fig. 11 zeigt eine weitere Halterung 5, wobei hier in dem Verformungsbereich sich eine schaumähnliche Struktur 32 z.B. aus Aluminium befindet. Die Streben 24 und 25 können dabei eine geringere Höhe aufweisen als die Stege 13 und 14. Falls die Halterung 5 mittels Strangpressen hergestellt wird, kann das Aufschäumen des Aluminiumschaums direkt in den Strangpressprozess integriert werden. Alternativ kann der Aluminiumschaum nach dem Strangpressen aufgeschäumt werden. Vorzugsweise kann dies vor dem Ablängen in die einzelnen Halterungen 5 geschehen und vor dem Nachbearbeiten der Halterung 5.

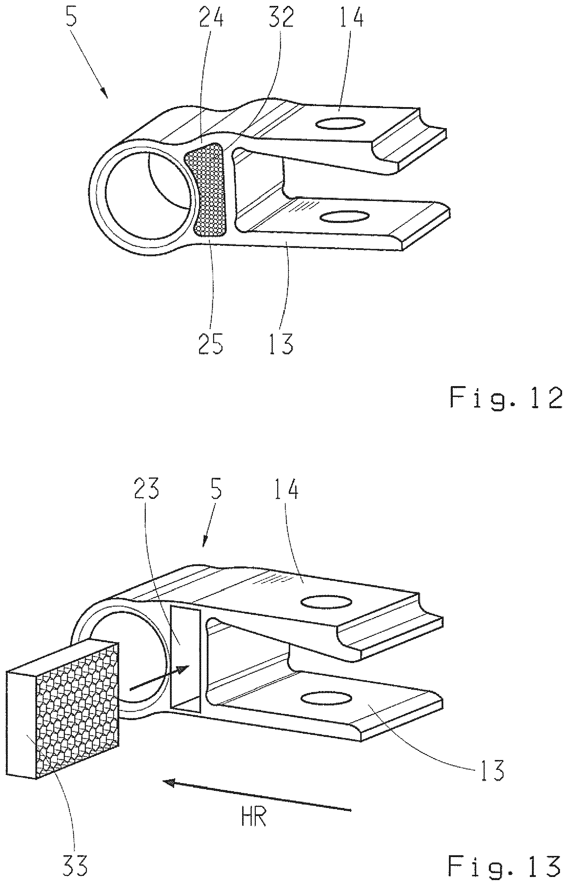

Fig. 12 zeigt die Halterung 5 gemäß der Ausführungsform nach Fig. 12 in einer perspektivischen Ansicht.

Fig. 13 zeigt eine weitere Ausführungsform einer Halterung 5, wobei die Halterung 5 ein separates Verformungsbauteil 33 umfasst, das in den Verformungsbereich 23 eingefügt werden kann. Das Verformungsbauteil 33 kann ebenfalls aus Aluminium oder einem anderen Metall sein. Auch sind Verformungsbauteile 33 aus anderen Materialien, wie Kunststoff möglich. Das Verformungsbauteil 33 weist eine wabenförmige Struktur auf, wobei die Waben sich in der Hauptausbreitungsrichtung HR der Halterung 5, also vom Federbefestigungsbereich 10 zum Radträgerbefestigungsbereich 9 erstrecken.

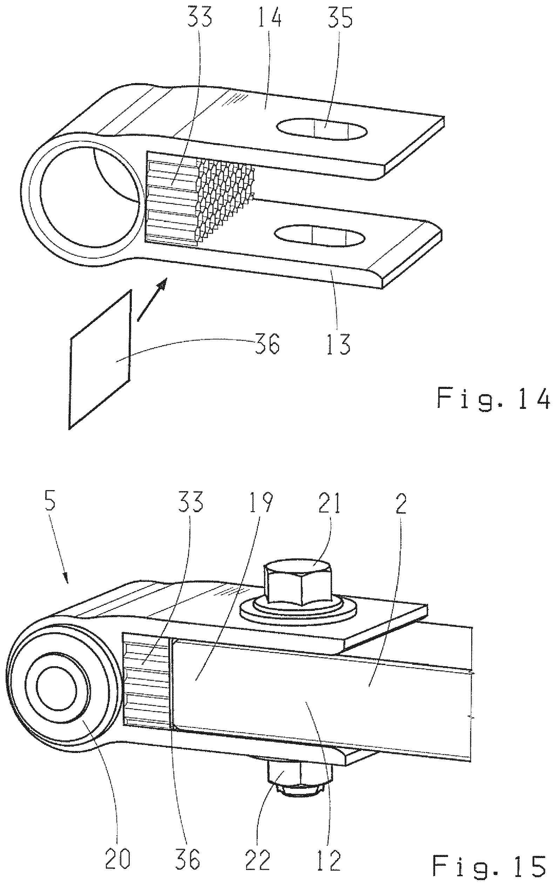

Fig. 14 zeigt eine weitere Ausführungsform einer Halterung 5. Dabei weist die Halterung an den Stegen 13 und 14 zwei Langlöcher auf, mittels derer die Feder 2 über eine oder mehrere Schraube geführt wird. Weiter weist die Halterung 5 in dem Federbefestigungsbereich in Richtung des Radträgerbefestigungsbereichs 9 ein Verformungsbauteil 33 auf. An dem Verformungsbauteil 33 liegt die Feder 2 an. Wird nun eine übermäßige Kraft von dem Radträgerbefestigungsbereich 9 auf den Federbefestigungsbereich übertragen, so rutscht die Feder auf das Verformungsbauteil 33 und verformt dieses Bauteil 33. Zur gleichmäßigeren Verteilung der Kraft vom Verformungsbereich auf die Feder ist zwischen dem Verformungsbauteil 33 und der Feder 2 eine Abdeckung 36 in der Aufnahme 12 angeordnet, welche den Verformungskörper 33 gegenüber der Feder 2 abdeckt und verschiebbar in der Aufnahme 12 gelagert ist. Dabei wird die Feder 2 weiter in Richtung des Radträgerbefestigungsbereichs 9 bewegt und der Radträger 4 somit verstellt. Die übermäßige Kraft wird dabei durch die Verformung des Verformungsbauteiles 33 abgefangen. Der Verformungsbauteil 33 kann dabei eine wabenförmige Struktur aufweisen, aber auch eine schwammförmige oder schaumförmige Struktur haben.

Fig. 15 zeigt die Ausführungsform der Halterung 5 nach Figur 14 mit einer Feder 2 und einem Gummilager. Dabei wird die Feder 2 durch eine Schraube 21 durchdrungen, welche in den Langlöchern 35 gehalten wird. Das Verformungsbauteil 33 ist dabei zwischen dem Radträgerbefestigungsbereich 9 und dem Federbefestigungsbereich 10 in dem Federbefestigungsbereich 10 angeordnet und durch eine Abdeckung 36 von der Feder 2 getrennt, so dass die Feder 2 nicht durch die Struktur des Verformungsbauteils 33 beschädigt wird. Bevorzugt wird die Feder von der Schraube nicht berührt, so dass auch hier keine Beschädigung der Feder bewirkt wird. Insbesondere wird die Feder durch den Federbefestigungsbereich verklemmt und so gehalten.

### Bezugszeichen

- 1: Fahrwerk
- 2: Querblattfeder
- 3, 3': Dämpfer
- 4,4': Radträger
- 5, 5': Halterung
- 6, 6': Blattfederhalter
- 7, 7': Längslenker
- 8, 8': Querlenker
- 9: Radträgerbefestigungsbereich
- 10: Federbefestigungsbereich
- 11: Ausnehmung
- 12: Aufnahme
- 13: Steg
- 14: Steg
- 15: Innenfläche
- 16: Innenfläche
- 17: Durchbohrung
- 18: Durchbohrung
- 19: Ende der Feder
- 20: Gummilager
- 21: Schraube
- 22: Mutter
- 23: Verformungsbereich
- 24: Steg
- 25: Steg
- 26: Außenfläche
- 27: vordere Innenfläche
- 28: Wand
- 29: Wand
- 29': Wand
- 29": Wand
- 29''': Wand
- 29'''': Wand
- 31 a: Zwischenraum
- 31 b: Zwischenraum
- 31 c: Zwischenraum
- 31 d: Zwischenraum
- 31 e: Zwischenraum
- 31 f: Zwischenraum
- 32: schwammähnliche Struktur
- 33: Verformungsbauteil
- 34: Wand
- 35: Langlöcher
- 36: Abdeckung

## Patentansprüche

1. Halterung (5) für eine Feder (2), insbesondere eine Blattfeder, umfassend einen Federbefestigungsbereich (10) zur Befestigung der Feder (2) an der Halterung (5), einen Radträgerbefestigungsbereich (9) zur Befestigung eines Radträgers (4) an der Feder, wobei die Halterung (5) einen Verformungsbereich (23) aufweist zur Kraftübertragung von dem Federbefestigungsbereich (10) auf den Radträgerbefestigungsbereich (9), **dadurch gekennzeichnet, dass** die Halterung (5) einstückig aus Metall und/oder Faserverbundwerkstoffen gebildet ist.

2. Halterung (5) für eine Feder (2) nach Anspruch 1, **dadurch gekennzeichnet, dass** der Verformungsbereich (23) so ausgestaltet ist, dass er sich plastisch verformt, wenn eine Kraft, welche eine gewisse Größe übersteigt, von dem Radträgerbefestigungsbereich (9) auf den Federbefestigungsbereich (10) übertragen wird.

3. Halterung (5) für eine Feder (2) nach einem der vorhergehenden Ansprüche, **dadurch gekennzeichnet, dass** sich der Verformungsbereich (23) zwischen dem Radträgerbefestigungsbereich (9) und dem Federbefestigungsbereich (10) befindet.

4. Halterung (5) für eine Feder (2) nach einem der vorhergehen Ansprüche, **dadurch gekennzeichnet, dass** der Verformungsbereich (8) zumindest eine Strebe (24, 25, 29) aufweist, die sich vom Radträgerbefestigungsbereich (9) zum Federbefestigungsbereich (10) erstreckt.

5. Halterung (5) für eine Feder (2) nach dem vorhergehenden Anspruch, **dadurch gekennzeichnet, dass** die zumindest eine Strebe (24, 25, 29) plattenförmig ist.

6. Halterung (5) für eine Feder (2) nach Anspruch 4 oder 5, **dadurch gekennzeichnet, dass** die Halterung (5) zwei Streben (24, 25) aufweist, die sich vom Radträgerbefestigungsbereich (9) zum Federbefestigungsbereich (10) erstrecken und einen Raum zumindest teilweise begrenzen.

7. Halterung (5) für eine Feder (2) nach einem der vorhergehenden Ansprüche, **dadurch gekennzeichnet, dass** der Verformungsbereich (8) einen schwammartigen und/oder schaumartigen Körper aufweist.

8. Halterung (5) nach einem der Ansprüche 1 bis 7 **dadurch gekennzeichnet, dass** die Halterung ein Verformungsbauteil (33) aufweist.

9. Halterung (5) für eine Feder (2) nach einem der vorhergehenden Ansprüche, **dadurch gekennzeichnet, dass** die Halterung (5) aus Aluminium gebildet ist.

10. Halterung (5) für eine Feder (2) nach einem der vorhergehenden Ansprüche, **dadurch gekennzeichnet, dass** der Radträgerbefestigungsbereich (9) ein Lager aufweist, zur Befestigung des Radträgers (4, 4') an der Halterung (5).

11. Halterung (5) für eine Feder (2) nach einem der vorhergehenden Ansprüche, **dadurch gekennzeichnet, dass** die Federbefestigung (10) eine Aufnahme (12) aufweist zur Aufnahme der Feder (2).

12. Halterung (5) nach einem der vorhergehenden Ansprüche, **dadurch gekennzeichnet, dass** die Feder (2) verschiebbar in der Halterung (5) gehalten wird.

13. Halterung (5) nach dem vorhergehenden Anspruch, **dadurch gekennzeichnet, dass** die Feder (2) in einer Verschiebungsrichtung durch ein Verformungsbauteil (33) an der Bewegung gehindert wird.

14. Halterung nach einem der vorhergehenden Ansprüche 12 und 13, **dadurch gekennzeichnet, dass** das Verformungsbauteil (33) mittels einer verschiebbaren Platte von der Feder (2) getrennt ist.

## Claims

1. Mount (5) for a spring (2), in particular a leaf spring, comprising a spring fastening region (10) for fastening the spring (2) to the mount (5), a wheel support fastening region (9) for fastening a wheel support (4) to the spring, the mount (5) having a deformation region (23) for the transmission of force from the spring fastening region (10) to the wheel support fastening region (9), **characterized in that** the mount (5) is formed in one piece from metal and/or fibre composite materials.

2. Mount (5) for a spring (2) according to Claim 1, **characterized in that** the deformation region (23) is configured in such a way that it is deformed plastically if a force which exceeds a certain magnitude is transmitted from the wheel support fastening region (9) to the spring fastening region (10) .

3. Mount (5) for a spring (2) according to either of the preceding claims, **characterized in that** the deformation region (23) is situated between the wheel support fastening region (9) and the spring fastening region (10).

4. Mount (5) for a spring (2) according to one of the preceding claims, **characterized in that** the deformation region (8) has at least one strut (24, 25, 29) which extends from the wheel support fastening region (9) to the spring fastening region (10).

5. Mount (5) for a spring (2) according to the preceding claim, **characterized in that** the at least one strut (24, 25, 29) is plate-shaped.

6. Mount (5) for a spring (2) according to Claim 4 or 5, **characterized in that** the mount (5) has two struts (24, 25) which extend from the wheel support fastening region (9) to the spring fastening region (10) and delimit a space at least partially.

7. Mount (5) for a spring (2) according to one of the preceding claims, **characterized in that** the deformation region (8) has a sponge-like and/or foam-like body.

8. Mount (5) according to one of Claims 1 to 7, **characterized in that** the mount has a deformation component (33).

9. Mount (5) for a spring (2) according to one of the preceding claims, **characterized in that** the mount (5) is formed from aluminium.

10. Mount (5) for a spring (2) according to one of the preceding claims, **characterized in that** the wheel support fastening region (9) has a bearing, for fastening the wheel support (4, 4') to the mount (5).

11. Mount (5) for a spring (2) according to one of the preceding claims, **characterized in that** the spring fastening means (10) has a receptacle (12) for receiving the spring (2).

12. Mount (5) according to one of the preceding claims, **characterized in that** the spring (2) is held displaceably in the mount (5).

13. Mount (5) according to the preceding claim, **characterized in that** the spring (2) is prevented from moving in a displacement direction by way of a deformation component (33).

14. Mount according to either of the preceding Claims 12 and 13, **characterized in that** the deformation component (33) is separated from the spring (2) by means of a displaceable plate.

## Revendications

1. Dispositif de retenue (5) pour un ressort (2), en particulier un ressort à lame, comprenant une région de fixation de ressort (10) pour la fixation du ressort (2) au dispositif de retenue (5), une région de fixation de support de roue (9) pour la fixation d'un support de roue (4) au ressort, le dispositif de retenue (5) présentant une région de déformation (23) pour le transfert de force de la région de fixation de ressort (10) à la région de fixation de support de roue (9), **caractérisé en ce que** le dispositif de retenue (5) est formé d'une seule pièce en métal et/ou en matériaux composites renforcés par des fibres.

2. Dispositif de retenue (5) pour un ressort (2) selon la revendication 1, **caractérisé en ce que** la région de déformation (23) est configurée de manière à se déformer plastiquement lorsqu'une force qui dépasse une certaine intensité est transmise de la région de fixation de support de roue (9) à la région de fixation de ressort (10).

3. Dispositif de retenue (5) pour un ressort (2) selon l'une quelconque des revendications précédentes, **caractérisé en ce que** la région de déformation (23) se trouve entre la région de fixation de support de roue (9) et la région de fixation de ressort (10).

4. Dispositif de retenue (5) pour un ressort (2) selon l'une quelconque des revendications précédentes, **caractérisé en ce que** la région de déformation (8) présente au moins une entretoise (24, 25, 29) qui s'étend depuis la région de fixation de support de roue (9) jusqu'à la région de fixation de ressort (10).

5. Dispositif de retenue (5) pour un ressort (2) selon l'une quelconque des revendications précédentes, **caractérisé en ce que** l'au moins une entretoise (24, 25, 29) est en forme de plaque.

6. Dispositif de retenue (5) pour un ressort (2) selon la revendication 4 ou 5, **caractérisé en ce que** le dispositif de retenue (5) présente deux entretoises (24, 25) qui s'étendent depuis la région de fixation de support de roue (9) jusqu'à la région de fixation de ressort (10) et qui délimitent au moins en partie un espace.

7. Dispositif de retenue (5) pour un ressort (2) selon l'une quelconque des revendications précédentes, **caractérisé en ce que** la région de déformation (8) présente un corps de type éponge et/ou de type mousse.

8. Dispositif de retenue (5) selon l'une quelconque des revendications 1 à 7, **caractérisé en ce que** le dispositif de retenue présente un composant de déformation (33).

9. Dispositif de retenue (5) pour un ressort (2) selon l'une quelconque des revendications précédentes, **caractérisé en ce que** le dispositif de retenue (5) est formé d'aluminium.

10. Dispositif de retenue (5) pour un ressort (2) selon l'une quelconque des revendications précédentes, **caractérisé en ce que** la région de fixation de support de roue (9) présente un palier pour la fixation du support de roue (4, 4') au dispositif de retenue (5).

11. Dispositif de retenue (5) pour un ressort (2) selon l'une quelconque des revendications précédentes, **caractérisé en ce que** la fixation de ressort (10) présente un logement (12) pour recevoir le ressort (2).

12. Dispositif de retenue (5) selon l'une quelconque des revendications précédentes, **caractérisé en ce que** le ressort (2) est retenu de manière déplaçable dans le dispositif de retenue (5).

13. Dispositif de retenue (5) selon la revendication précédente, **caractérisé en ce qu'**un composant de déformation (33) empêche le mouvement du ressort (2) dans un sens de déplacement.

14. Dispositif de retenue selon l'une quelconque des revendications précédentes 12 et 13, **caractérisé en ce que** le composant de déformation (33) est séparé du ressort (2) au moyen d'une plaque mobile.
